# EUROPEAN PATENT APPLICATION

(11) **EP 4 597 386 A1**
(43) Date of publication of application: **06.08.2025**
(21) Application number: 25155062.0
(22) Date of filing: 30.01.2025
(51) Int. Cl.: G06Q 10/08, G06Q 10/083, G06Q 10/0833, H04Q 9/02, H04W 4/02, H04W 4/029

(54) **SYSTEM AND METHOD FOR REAL-TIME INBOUND TRIP AUTOMATION AND EVENT MONITORING FOR SHIPMENTS**

(30) Priority: 30.01.2024 US 202463627039 P
(71) Applicant: Carrier Corporation, Palm Beach Gardens, FL 33418 (US)
(72) Inventor: REYNOLDS, Corissa, Beverly, MA 01915 (US); KHANDEKAR, Anup, 500081 Hyderabad (IN)
(74) Representative: Dehns

(57) **Abstract**

Described herein is a system (100) for real-time inbound trip automation and event monitoring for shipments. The system (100) comprises one or more products (112) associated with one or more shipments, one or more monitoring devices (114) assigned to the one or more shipments and affixed to the one or more products (112). Each of the monitoring devices (114) is configured to monitor attributes and a location of the one or more products (112). The system (100) comprises a server (102) configured to receive a set of data packets pertaining to a predefined trip automation rule defined for an inbound trip for the one or more shipments, detect a location of the one or more monitoring devices (114), and automatically create the trip for the one or more shipments associated with the activated monitoring devices (114) upon a positive matching of the detected location with the predefined origin and mark the detected location as an origin for the created trip.

## Description

This invention relates to the field of trip monitoring systems and methods, and more particularly, to a system and method for real-time inbound trip automation and event monitoring for shipments.

According to a first aspect of the invention, there is provided a system for real-time inbound trip automation and event monitoring for shipments. The system comprises one or more products associated with one or more shipments, one or more monitoring devices assigned to one or more shipments and affixed to the one or more products, wherein each of the monitoring devices is configured to: monitor attributes of the one or more products, monitor a location of the corresponding products, and transmit a control signal comprising the monitored attributes and location to a server. The server comprises one or more processors coupled to a memory storing instructions executable by the one or more processors, wherein, upon execution of the instructions, the one or more processors are configured to receive the control signal pertaining to a trip automation rule defined for an inbound trip for the one or more shipments wherein the trip automation rule comprises an origin of the trip for the corresponding shipments, and details of the one or more products mapped to the respective origin for the corresponding shipment. The one or more processors are also configured to detect a location entity of the one or more monitoring devices upon activation of the corresponding monitoring devices based on the monitored location in the control signal; and automatically create the trip for the one or more shipments associated with the activated monitoring devices upon a positive matching of the detected location with the origin and correspondingly mark the detected location entity as a marked origin for the created trip, by instantiating a trip object with the marked origin according to the trip automation rule.

Optionally, the one or more processors are further configured to automatically create the trip and mark a system default value as the origin for the created trip, either when the detection location is unavailable or on negative matching of the detected location with the origin of any of the trip automation rule.

Optionally, the processors are further configured to check if a trip is already created for the one or more shipments upon activation of the corresponding assigned monitoring devices and correspondingly create the trip for the respective shipments in case the trip is not created and the detected location of the activated monitoring devices matches with the origin.

Optionally, the one or more processors of the server are further configured to extract, from the trip automation rule, the details of the one or more products being mapped to the created trip and correspondingly enable adding the corresponding products to the marked origin.

Optionally, the attributes associated with the one or more products comprise one or more of temperature, ambient light, humidity, gas composition, and pressure, wherein the predefined trip automation rule further comprises a threshold range of the attributes for the one or more products.

Optionally, the one or more processors of the server are further configured to determine the one or more products to be in any one of: an arrival event at an unspecified stop, an intermediate stop, or a destination, when the monitored location of the one or more monitoring devices associated with the corresponding products is found to be stationary outside a geofence of the origin, based on duration for which the monitored attributes of the one or more products are found to be beyond the threshold range.

Optionally, the one or more processors of the server are further configured to determine the one or more products to be in an arrival event at an unspecified stop when the monitored or detected location of the one or more monitoring devices is found to be stationary for a first predefined time duration outside a geofence of the origin, and the monitored attributes of the products are found to be within the threshold range during the first predefined time duration.

Optionally, the one or more processors of the server are further configured to determine the one or more products to be at an intermediate stop when the monitored or detected location of the one or more monitoring devices is found to be stationary for a second predefined time duration outside the geofence of the origin, and any of the monitored attributes of the products are found to be beyond the threshold range during the second predefined time duration.

Optionally, the one or more processors of the server are further configured to determine the one or more products to be at a destination when the monitored or detected location of the one or more monitoring devices associated with the corresponding products is found to be stationary for a third predefined time duration outside the geofence of the origin, and the monitored attributes of the corresponding products are found to be beyond the threshold range.

In one or more embodiments, the one or more monitoring devices are affixed to the one or more products by an attachment means, optionally wherein the attachment means is any one or a combination of: screws, nails, rivets, adhesives, magnets, hook and loop fasteners, hook and slot fasteners, interlocking elements, friction-grip releasable fasteners, and fastening straps.

In one or more embodiments, the one or more monitoring devices comprise a housing configured to accommodate one or more sensors configured to detect the attributes and the location of the one or more products, and a controller configured to monitor the attributes and the location detected by the one or more sensors, optionally wherein the housing is affixed either directly to the one or more products, or a packaging device associated with the one or more products.

Optionally, the trip automation rule comprises one or more locations comprising the origin, one or more intermediate stops, and a destination associated with the trip for the one or more shipments, and a geofence of a radius around each of the one or more locations.

Optionally, the one or more processors of the server are further configured to monitor the location of the one or more monitoring devices upon creation of the trip and determine and confirm the location of the one or more products to be at one of the one or more locations during the created trip when the monitored location of the one or more monitoring devices is found to be within the geofence of the corresponding locations.

Optionally, the one or more processors of the server are further configured to determine the one or more products to be at one of the intermediate stops when the monitored location of the one or more monitoring devices is found to be stationary within intermediate stops or within the geofence of the corresponding intermediate stops defined in the trip automation rule.

Optionally, the one or more processors of the server are further configured to determine the one or more products to be at the destination when the monitored location of the one or more monitoring devices is found to be stationary within or within the geofence of the destination defined in the trip automation rule.

Optionally, the one or more processors of the server are further configured to determine the one or more products to be in an in-transit state when the monitored location of the one or more monitoring devices is found to moving and outside the geofence of the one or more locations.

Optionally, the one or more processors of the server are further configured to receive messages pertaining to the monitored location and attributes data from the one or more monitoring devices upon activation of the corresponding monitoring devices, check and validate the trip automation rule upon receiving each of the messages from the one or more monitoring devices, by comparing ShipBill To and/or the Part Number of the products with ShipBill To and/or the Part Number of the corresponding monitoring devices, and create the trip and follow the trip automation rule upon a positive matching of the ShipBill To and/or the Part Number of the products and the ShipBill To and/or the Part Number of the corresponding monitoring device, and wherein the one or more processors of the server are configured to skip following the trip automation rule when the message is received from an activated monitoring device that does not have a mapped ShipBill To and/or the Part Number.

Optionally, the system comprises one or more mobile devices associated with one or more registered users and one or more registered entities associated with a service provider, wherein the one or more mobile devices allow the one or more registered users and the registered entities, based on access and role defined in the trip automation rule, to monitor the attributes of the one or more products and further monitor the location and a corresponding halt time and time stamp of the one or more products being confirmed and notified by the processors during the trip.

Optionally, the processors allow the one or more registered users and/or the registered entities to manually create and/or update, using the one or more mobile devices and/or the one or more monitoring devices, the trip automation rule based on access and role defined in the trip automation rule.

According to a second aspect of the invention there is provided a method for real-time inbound trip automation and event monitoring of shipments. The method comprises the steps of: defining a trip automation rule for one or more shipments by: assigning one or more products for one or more origin locations; assigning the one or more origin locations to an origin location group; and providing, a predefined origin of the trip for the corresponding shipments, a threshold range of attributes for the one or more products, and details of the one or more products mapped to the respective predefined origin for the corresponding shipment; and detecting a location of the one or more monitoring devices upon activation of the corresponding monitoring devices; and creating the trip for the one or more shipments associated with the activated monitoring devices upon a positive matching of the detected location of the activated monitoring devices with the predefined origin and correspondingly mark the detected location as an origin for the created trip.

Optionally, the method comprises the steps of determining the one or more products to be in any one of: an arrival event at an unspecified stop, an intermediate stop, or a destination, when the monitored location of the one or more monitoring devices associated with the corresponding products is found to be stationary outside a geofence of the origin, based on duration for which the monitored attributes of the one or more products are found to be beyond the threshold range.

Optionally, the method comprises the steps of determining the one or more products to be in an arrival event at an unspecified stop when the monitored location of the one or more monitoring devices is found to be stationary for a first predefined time outside a geofence of the origin, and the monitored attributes of the products are found to be within the threshold range during the first predefined time.

Optionally, when intermediate stops for the trip are not defined in the trip automation rule, the method comprises the steps of determining the one or more products to be at an intermediate stop when the monitored location of the one or more monitoring devices is found to be stationary for a second duration outside the geofence of the origin, and any of the monitored attributes of the products is found to be beyond the threshold range during the second duration.

Optionally, when the destination for the trip is not defined in the trip automation rule, the method comprises the steps of determining the one or more products to be at a destination when the monitored location of the one or more monitoring devices is found to be stationary for a third duration outside the geofence of the origin, and the monitored attributes of the products is found to be beyond the threshold range.

Optionally, the trip automation rule comprises one or more locations comprising the origin, one or more intermediate stops, and a destination associated with the trip for the one or more shipments, and a geofence of a radius around each of the one or more locations. The method further comprises monitoring real-time location of the one or more monitoring devices upon creation of the trip and determining and confirming the location of the one or more products to be at one of the one or more locations during the created trip when the monitored location of the one or more monitoring devices is found to be within the geofence of the corresponding locations.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

The accompanying drawings are included to provide a further understanding of the invention and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label. Certain exemplary embodiments will now be described in greater detail by way of example only and with reference to the accompanying drawings in which:
FIG. 1 is a schematic diagram illustrating an exemplary network architecture of the system for real-time inbound trip automation and event monitoring for shipments.
FIG. 2 is a schematic diagram illustrating functional modules associated with the server of the system.
FIG. 3 is a schematic diagram illustrating the block diagram of the monitoring device used in the system.
FIG. 4A is a schematic diagram illustrating an exemplary scenario when the trip is stationary, but sensor data is not going beyond a specific range.
FIG. 4B is a schematic diagram illustrating another exemplary scenario when the trip is stationary and one of the sensors is going beyond the specified range.
FIG. 4C is a schematic diagram illustrating yet another exemplary scenario when the trip is stationary, and both the sensors (temperature sensor and light sensor) are going beyond the specified range.
FIG. 5 is a flow diagram illustrating a method for real-time automation and event monitoring for inbound shipments.

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, described herein may be oriented in any desired direction.

Existing systems in the field of trip monitoring typically support inbound trip monitoring, offering users the capability to manually create trips and monitor associated events. However, the manual nature of these processes introduces challenges, particularly when dealing with high volumes of trips. Inbound customers relying on these platforms often use a hands-off approach to efficiently create and manage a large number of trips, a process that is typically manual in nature within current systems.

The manual creation of trips in existing systems poses a significant risk of errors as it depends on user input, leading to trips being generated with incorrect or incomplete information. The accuracy of trip information is crucial for the seamless execution of the entire trip lifecycle, including departure, alarm triggers, and arrival. Trips containing inaccurate data necessitate manual intervention by employees, consuming a substantial number of internal resources and increasing the potential for operational disruptions.

There is, therefore, a need to provide a simple, reliable solution that allows the automatic creation and processing of inbound trips and also enables automated event monitoring for shipments in real time.

This disclosure provides a system and method for real-time inbound trip automation and event monitoring for shipments, which eliminates the need for the receivers (users) and suppliers (entities) to manually generate multiple trips across various programs and concurrently reduce instances of non-arrived trips. The system's functionality is driven by a strategic approach, utilizing a gateway designated as the "receiver program" at the user end and the "supplier program" at the supplier end. This program facilitates automating trip creation based on the initiation of monitoring activities in the shipments.

When a monitoring device associated with products of the shipments begins reporting from an origin (e.g. a predefined origin) location upon activation of the corresponding monitoring device by the user (receivers), the system automatically creates a trip, streamlining the process for the entities (suppliers). This automation is facilitated through an inbound trip automation rule (e.g. a predefined inbound trip automation rule) defined in the system. The system ensures precision by selectively applying product(s) to the automated trip creation process. This selection is applied to products that have been previously mapped exclusively to the designated origin location, ensuring accuracy and relevance in trip generation. Furthermore, the determination of the final destination is achieved using a combination of information derived from the program's arrival event and the trip automation rule's configured final destinations. This integration ensures that the system not only automates the trip creation process but also establishes the final destination with precision, enhancing the overall efficacy of inbound logistics management.

Further, at the supplier's end, the system involves the selective application of product(s) exclusively to the automated trip creation process. This selection is applied to products that have been previously mapped to the specified origin location. By doing so, the system ensures relevance and accuracy in the trip creation, focusing solely on products associated with the designated location. The determination of the final destination is achieved using a combination of information derived from the ship/bill to the supplier program, the program's arrival event, and the automation rule's configured final destinations. By integrating these factors, the system establishes the final destination with precision, contributing to overall accuracy in logistics planning.

In addition, the system reduces the instances of non-arrived trips within logistics and supply chain management. The functionality of the system involves triggering an arrival event, a feature that is activated when a combination of specific conditions associated with the shipment or products are met or exceeded. These conditions include factors such as location (whether known or unknown), temperature, and light thresholds, but are not limited to the like. This dynamic triggering mechanism enhances the precision and reliability of trip arrivals, contributing to a streamlined logistics process.

Moreover, when a trip is manually created with an unknown destination or through the inbound automation process, the system employs a location assessment based on latitudes/longitudes, with a precision of up to 0.02 miles (0.03 kilometres). This fine-grained location analysis ensures accuracy even in scenarios where destination information may be incomplete or uncertain. Further, the system also provides a solution for handling final destinations, whether defined manually or through automated means. In such cases, the geofence settings associated with the specified final destination take precedence over the location logic of the arrival event. This hierarchical prioritization ensures that the determination of the final destination is consistent, reliable, and aligned with pre-defined settings.

Accordingly, the system identifies the absence of a trip and initiates its creation, alleviating the need for manual intervention. In addition, the system also ensures continuous, real-time updates to trip data by assimilating information reported by associated monitoring devices. This dynamic feature grants users ongoing visibility into the monitoring devices or product's location, companionship, potential excursions requiring intervention, and the monitoring device's status as the shipment progresses toward incremental or final destinations. Further, the system provides a trip arrival event to evaluate location, temperature, and light reported by the monitoring device against predefined thresholds. This event enhances the precision of trip status assessments, determining when a trip is officially considered arrived.

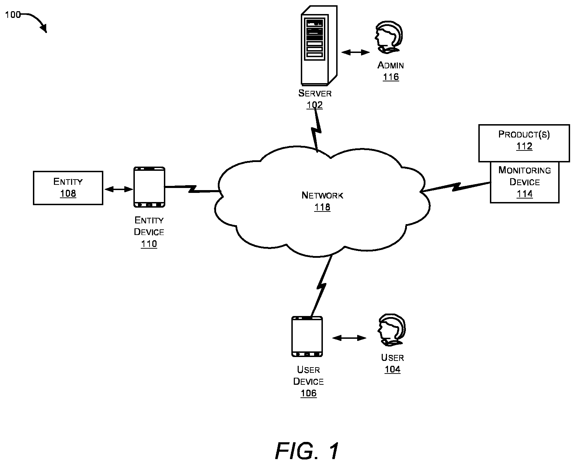

Thus, the system and method address the drawbacks, limitations, and shortcomings associated with existing solutions that are reliant on manual trip creation, by enabling automated inbound trip creation and event monitoring for both receivers (users) and their suppliers (entities). The detailed operation and functional components involved in the system and method have been described later in conjunction with FIGs. 1 to 5.

Referring to FIG. 1, an exemplary network architecture 1000 of the system 100 is illustrated. In one or more embodiments, the system 100 enables real-time inbound trip automation and event monitoring for shipments. Although this invention is explained for inbound shipments, it may be understood that system 100 may also be implemented for outbound shipments. Further, this invention has been explained considering that the system 100 is implemented as a web-application or computer program on a server 102, it may be understood that system 100 may also be implemented in a variety of computing systems, such as a laptop computer, a desktop computer, a notebook, a workstation, a server, a network server, a cloud-based environment, and the like. It would be appreciated that the system 100 is accessed by multiple users 104 (collectively referred to as users or receivers or customers 104, herein), through one or more user mobile devices 106 (collectively referred to as user devices or receiver devices 106, herein), or applications residing on the user devices 106. The users or receivers 104 may be an individual person, or a group of persons, or an organization, and the like, who/which require the inbound shipment service for their shipments through the system.

The system 100 is further accessed by multiple entities 108 (collectively referred to as entities or suppliers 108, hereinafter) associated with a shipment service provider or logistics service provider, through one or more entity mobile devices 110 (collectively referred to as entity devices or supplier devices 110, hereinafter), or applications residing on the entity devices 110. The entity or supplier 108 may be a registered person or a group of registered persons associated with the service provider. The entities 108 may be associated with a packaging team, transportation team, maintenance team, quality monitoring team, operations team, and the like associated with the service provider. Further, the system 100 is accessed by an administrator 116 (admin) at the server end of the server 102.

In one or more embodiments, the system 100 registers the users (receivers) and the entities (suppliers) as registered users 104 and registered entities 108 respectively, upon positive verification of their registered mobile devices 106, 110, respectively, by the admin 116 at the server end. The system 100 requests and receives, upon a first communicative coupling (or first-time registration) of the user's mobile devices 106 with the server 102, the details of the corresponding user from the mobile devices 106 of the users 104, and correspondingly registers the users as the registered user 104 upon positive verification of the corresponding user details. Similarly, the system 100 requests and receives, upon a first communicative coupling (first-time registration) of the entity mobile devices 110 with the server 102, the details of the corresponding entity 108 from the entity mobile devices 110, and correspondingly registers the entities as the registered entity 108 upon positive verification of the corresponding entity details. In one or more embodiments, the details of users 104 and entities 108 include name, photo, age, gender, mobile number, location, biometrics details, designation, and role of the registered users, but not limited to the like. The users 104 and the entities 108 can access the system 100 through a mobile or web application or software program residing on their mobile device 106, 110, or through a website. For instance, the users or receivers 104 can access the system 100 using the receiver program in the user device 106, and the entities or suppliers 108 can access the system 100 using the supplier program in the entity device 110.

In one or more embodiments, the network architecture 1000 may further include one or more monitoring devices 114 (collectively referred to as monitoring devices 114, herein) assigned to the one or more shipments and affixed to products 112 associated with the shipments. Each of the monitoring devices 114 is configured to monitor real-time attributes of the products 112 and a real-time location of the corresponding products 112. In one or more embodiments, the attributes associated with the products 112 comprise one or more of temperature, ambient light, humidity, gas composition, and pressure, but is not limited to the like. In one or more embodiments, the monitoring devices 114 may include a controller.

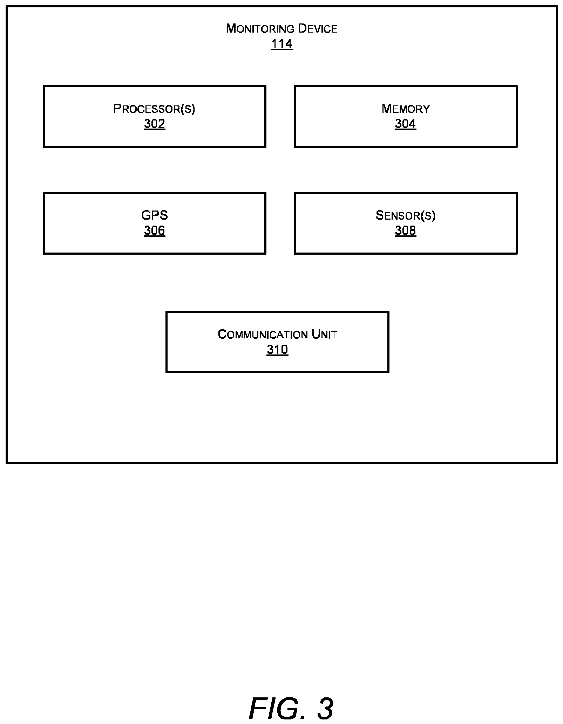

The controller may be configured to transmit a control signal to the system 100 (or a cloud server). The control signal may include location information/data (i.e., latitude coordinate and longitude coordinate). The system 100 may be configured determine if the location is known or unknown (i.e., based on the location information/data), and applies the relevant inbound automation rules. The control signal may also include the monitored attributes therein. In one or more embodiments, the control signal may be transmitted in the form of a set of data packets. In one or more embodiments, the control signals may be transmitted when the monitoring devices 114/the controller is actuated or switched on, which may be done manually (such as by physically actuating an 'on' button, for example), or automatically (such as by `waking up' the controller from a sleep mode after an interval of time or at a predefined time). Acting as an intermediary between various sensors (such as those used for temperature, humidity, light, carbon dioxide, and global positioning system (GPS)) and a communication unit of the monitoring device 114 (as further explained in reference to FIG. 3), the controller ensures that data is transmitted to the cloud/system 100. The controller may guarantee that all relevant environmental and location data is collected in real time, processed effectively, and sent to the cloud/system 100 for further analysis or monitoring. Additionally, the controller manages data stored in a memory unit, retrieving, and processing this stored data as required before transmitting it to the cloud/system 100.

Further, the controller/monitoring devices 114 may also be configured to transmit the control signal in real-time, and/or at regular intervals. Establishing the communication between the controller and the cloud/server 102 reduces operational latency, improves precision of control of the relevant inbound automation rules. Further, the security of the system 100 as a whole may be improved by preventing unauthorized access through secure transmission between the controller and the cloud system/system 100 using an encryption authorization protocol. The encryption authorization protocol may encrypt the control signals for secure transmission. The control signals may be decoded/decodable exclusively by the server 102/system 100. The encryption may also be lightweight (i.e., having low size/memory footprint), thereby allowing for communication/transmission of the control signals with minimal bandwidth requirements

The system 100/server 102 is configured to receive the control signal (which may be in the form of a set of data packets) pertaining to a trip automation rule associated with an inbound trip for one or more shipments. The trip automation rule can be defined and/or modified by the admin 116, the users 104, and/or the entities 108 based on an access level and a role assigned to them, as the data structure or a set of processor-executable functions that determine associate various attributes of the products 112 with those of the corresponding shipment. In one or more embodiments, the trip automation rule comprises container groups assigned for the shipments, a trip template, a unique identifier (UID) number of the monitoring devices 114, an origin of the trip for the corresponding shipments, a threshold range of the attributes for the products 112, and details of the products 112 mapped to the respective origin for the corresponding shipment. In one or more embodiments, for automated trip creation, the trip automation rule can further comprise one or more locations/location entities/location groups such as the origin, one or more intermediate stops, a destination associated with the trip, a geofence of a radius around each of the locations, alarm conditions for the products 112, event rules configuration, real-time action requirement, event notification and recipient's configuration, and the likes. One or more locations/location entities may be defined or stored in the system 100, where each location entity is associated with a location address (i.e., longitude and/or latitude coordinates according to a geospatial mapping system, such as Global Positioning System (GPS)). The location entities/groups may correspond to a geographical area defined by a set of longitudinal and latitudinal coordinates.

The system 100 is configured to detect the location entity/group of the monitoring devices 114 associated with any of the shipments upon activation of the corresponding monitoring devices 114 by the user 104 or the entity 108. The location may be detected based on longitude and latitude coordinates provided in the data packets/control signals. The longitude and latitude coordinates may be provided in a data structure compliant with the geospatial mapping system used for defining the locations/location entities associated with each of the trip automation rules. The location entity may be detected by identifying the geographical area in which the monitoring device 114/controller is, as indicated by the monitored location in the control signal. The location entity may be identified based on the monitored location being within one of the location entities/groups defined for the trip automation rules. The system 100 accordingly, automatically creates the trip for the shipments associated with the activated monitoring devices 114 upon a positive matching of the detected location entity of the activated monitoring devices 114 with the origin defined in the trip automation rule and correspondingly marks the detected location entity as a marked origin for the created trip. The trip may be created by instantiating a trip object with the marked origin. The trip object may be any one or a combination of; software functions, methods, objects/classes, libraries, application programming interfaces (APIs), and the like, but not limited thereto. The trip object may be configured to store data, as previously described, associated with trips between any two origins and destinations of the corresponding products 112. In some embodiments, the trip object may be processed, interacted with, and modified based on invocation of methods/functions associated with the trip object. Multiple instantiations of the trip object may be generated, to create the trips. In one or more embodiments, the trip object may be accessed (such as using API calls) for tracking the products 112 as they are shipped. The API calls may be invoked using the user device 106 or the entity device 110. In one or more embodiments, the system 100/server 102 may be configured to display the location and the monitored attributes (through the trip object) of the products 112 on a user interface/display device thereof, either in real-time or on a request made through API calls. In one or more embodiments, the system 100/server 102 may be configured to transmit the monitored location and the attributes (through the trip object) to the user device 106 and/or entity device 110. The trip object may be transmitted in the form of data packets or signals, through the network 118. The data packets and/or the signals may be encrypted using an encryption authorization protocol. Further, the system 100 is configured to extract, from the trip automation rule, the details of the products 112 being mapped to the created trip and correspondingly enable adding the corresponding products to the marked origin.

In one or more embodiments, the trip may be created on the detected location matching the origin in the trip automation rule. However, in some cases, there may be a period of time between the activation of the monitoring devices 114, and determination of location of the monitoring device 114, which may cause delays or periods of time where the products 112 are not tracked due to non-creation of the trip. To avoid such delays, the system 100 may be configured to create a trip for the products 112 associated with the monitoring device 114, and set the location/origin for the trip as with a system default value, such as `unknown origin.' In such embodiments, by creating the trip, the system 100 may use the activated monitoring device 114 to continue tracking other attributes of the products 112, while the detected location of the monitoring device 114 is either unavailable (or is still being determined), or when there is a negative matching between the detected location and any of the trip automation rules of the system 100. In such embodiments, the users (receivers) may be able to track the products 112 associated with the activated monitoring device 114, without waiting for the activated monitoring device 114 to determine the location entity thereof or without requiring the detected location entity to match with the location entity of any of the trip automation rule stored in the system 100.

For example, when the monitoring device 114 is activated, and if the activated monitoring device 114 is sitting/waiting at the supplier warehouse for five hours before the corresponding shipment starts moving from an unidentified location, to an in-transit state, the system 100 may create the trip with the origin marked with the system default value (i.e., `unknown origin'), thereby allowing the products 112 to be tracked during the five hour waiting period as well.

In one or more embodiments, at least one trip automation rule may include the system default value as the `predefined origin' thereof, with the trip being created according to the at least one trip automation rule when the detected location is not identified or when the detected location entity does not match with the location entities of other trip automation rules. In one or more embodiments, creating the trip with the system default value may be an optional/configurable feature, and the receivers, suppliers, and/or administrators 116 may select whether to allow the trips to be created with the system default value.

In one or more embodiments, the system 100 initially checks if a trip is already created for the shipments upon activation of the corresponding assigned monitoring devices 114 and further creates the trip for the respective shipments in case the trip is not created and the detected location of the activated monitoring devices 114 matches with the predefined origin defined in the trip automation rule.

In one or more embodiments, the system 100 (through the server 102) is configured to receive messages pertaining to the monitored location and attribute data from the monitoring devices 114 upon activation of the corresponding monitoring devices 114. The server 102 checks and validates the trip automation rule for each of the shipments upon receiving each of the messages from the monitoring devices 114, by identifying the related program(s) through either the ShipBill To mapping and/or its Part Number mapping associated with the corresponding monitoring devices 114. The system 100 accordingly creates the trip and follows the trip automation rule upon determination of the mapped Supplier Program and/or mapped Receiver Program. However, the system 100 is configured to skip following the trip automation rule when the message is received from an activated monitoring device 114 that is not mapped to either a Supplier Program and/or Receiver Program and where no trip automation rule exists in those aforementioned programs.

In one or more embodiments, the system 100 is further configured to determine the one or more products to be in any one of: an arrival event at an unspecified stop, an intermediate stop, or a destination, when the monitored location of the one or more monitoring devices associated with the corresponding products is found to be stationary outside a geofence of the origin, based on duration for which the monitored attributes of the one or more products are found to be beyond the threshold range.

In one or more embodiments, the system 100 is configured to determine the trip to be in an arrival event at an unspecified stop during the created trip when the monitored location of the monitoring devices 114 associated with the corresponding product is found to be stationary for a first duration outside the geofence of the origin, and the monitored attributes of the products 112 are found to be within the threshold range during the first duration.

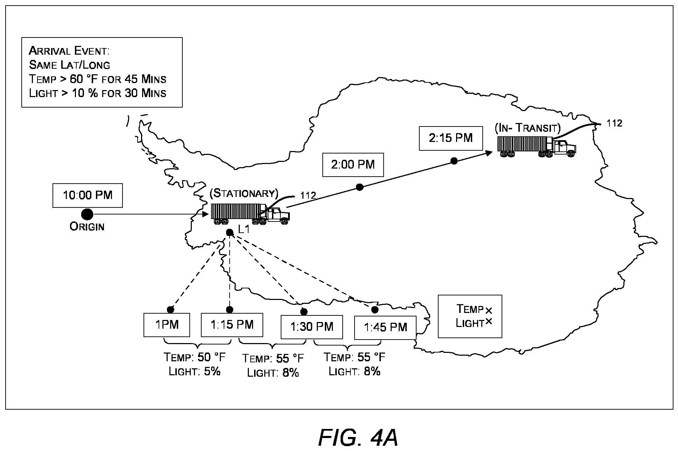

In an example, referring to FIG. 4A, a schematic diagram illustrating an exemplary scenario when the trip is stationary, but sensor data is not going beyond the threshold range is disclosed. As illustrated, the threshold value for temperature for a product can be specified as greater than 60°F (20°C) for 45 minutes and the threshold value for light for a product can be specified as greater than 10% for 30 minutes in the trip automation rule. As can be seen, the product is found to be stationary at an unspecified location L1 for 45 minutes, and the monitored temperature and light for the product is also detected to be within the threshold values during this period. Accordingly, the system 100 identifies and marks the location L1 as an unspecified stop for the created trip.

In one or more embodiments, when the intermediate stops for the created trip is unspecified or unknown, the system 100 is configured to determine the product to be at an intermediate stop when the monitored location of the monitoring devices 114 associated with the corresponding product is found to be stationary for a second duration outside the geofence of the origin, and any of the monitored attributes of the products 112are found to be beyond the threshold range during the second duration.

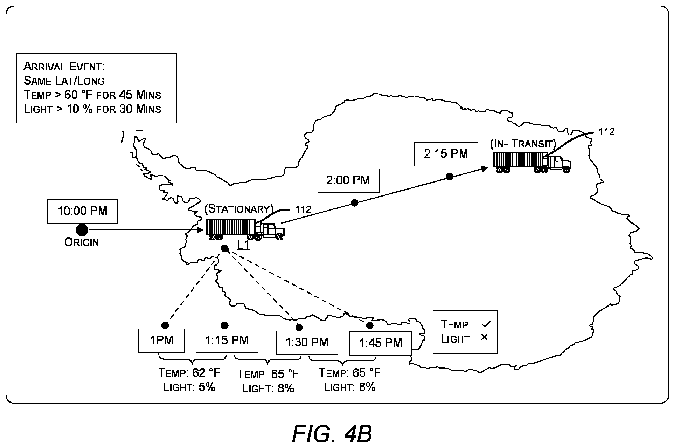

In another example, referring to FIG. 4B, a schematic diagram illustrating another exemplary scenario when the trip is stationary but one of the sensors is going beyond the threshold range is disclosed. As illustrated, the threshold value for temperature for the product can be specified as greater than 60°F (20°C) for 45 minutes and the threshold value for light for the product can be specified as greater than 10% for 30 minutes in the predefined trip automation rule. As can be seen, the product is found to be stationary at an unspecified location L1 for 45 minutes and the monitored light for the product is also detected to be within the threshold value, however, the monitored temperature for the product is detected to be outside the threshold value during this period. Accordingly, the system 100 identifies and marks the location L1 as an intermediate stop for the trip.

In one or more embodiments, when the final destination for the created trip is unspecified or unknown, the system 100 is configured to determine the product to be at a destination when the monitored location of the monitoring devices 114 associated with the corresponding product is found to be stationary for a third duration outside the geofence of the origin, and the monitored attributes of the product is found to be beyond the threshold range.

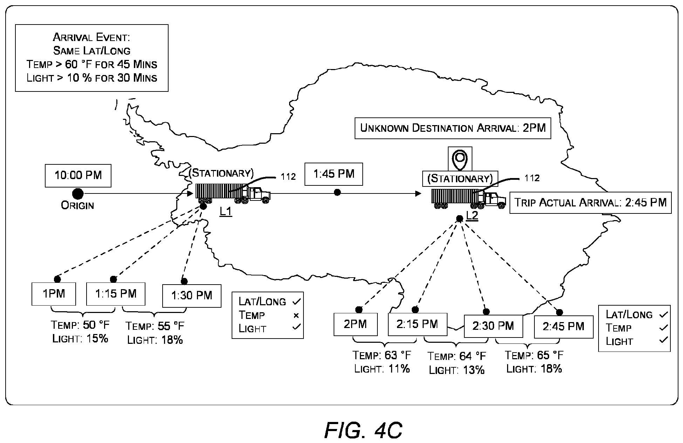

In an example, referring to FIG. 4C, a schematic diagram illustrating yet another exemplary scenario when the trip is stationary, and both the sensors (temperature sensor and light sensor) are going beyond the threshold range is disclosed. As illustrated, the threshold value for temperature for the product can be specified as greater than 60°F (20°C) for 45 minutes and the threshold value for light for the product can be specified as greater than 10% for 30 minutes in the trip automation rule. As can be seen, the product is found to be stationary at the unspecified location L1 for 45 minutes and the monitored temperature for the product is also detected to be within the threshold value, however, the monitored light for the product is detected to be outside the threshold value during this period. Accordingly, the system 100 identifies and marks the location L1 as an intermediate stop for the trip. Further, as can be seen, the product is found to be stationary at another unspecified location L2 for 45 minutes, however, both the monitored temperature and light for the product are detected to be outside the threshold value during this period. Accordingly, the system 100 identifies and marks the location L2 as the final destination for the trip.

In one or more embodiments, when the intermediate stops for the created trip is defined in the trip automation rule, the server 102 is configured to determine the product to be at one of the intermediate stops when the monitored location of the monitoring devices 114 associated with the product is found to be stationary within or within the geofence of the corresponding defined intermediate stops.

In one or more embodiments, when the final destination for the created trip is defined in the trip automation rule, the system 100 is configured to determine the product to be at the destination when the monitored location of the monitoring devices 114 associated with the corresponding product is found to be stationary within the defined destination or within the geofence of the defined destination.

Further, in one or more embodiments, when the detected location of the monitoring devices 114 associated with the corresponding product is found to moving and outside the geofence of the origin, the intermediate stops, and the final destination, the system 100 is configured to determine the product associated with the corresponding monitoring devices 114 to be in a "In Transit" state.

Furthermore, the system 100/server 102 and/or the monitoring devices 114 are configured to determine and record an arrival time, a departure time, and/or a halt time of the product at any of the locations ((unknown) origin, intermediate stops, unspecified stops, and the destination based on a time stamp and a total time spent by the corresponding monitoring device 114 across within the geofence of the corresponding location.

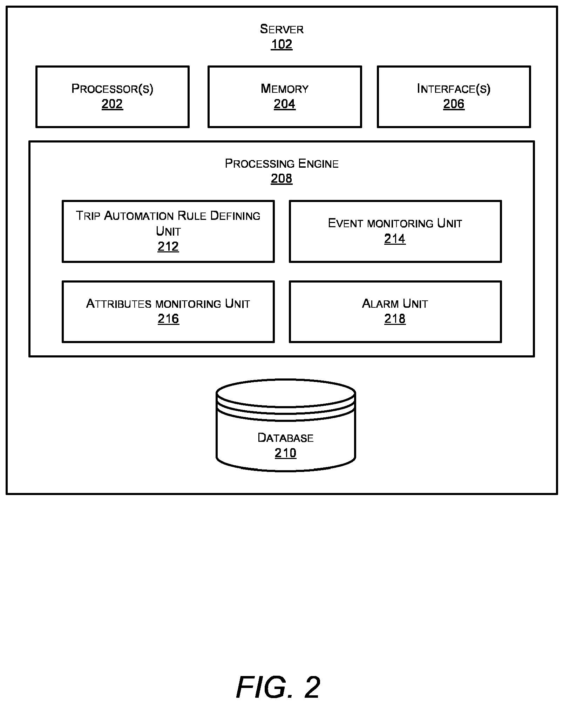

In one or more embodiments, the monitoring devices 114 are in a one-way communication with the system 100/server 102. Once the trip is created, the monitoring devices 114 monitors the latitude/longitude (location) of the product in real-time during the trip and transmits the detected location data (arrival time, a departure time, and/or a halt time of the products 112 at the locations) to the system 100 in real-time or at predefined interval upon trip creation. Further, the system 100 confirms and notifies the location of the product to the users 104 and the entities 108 by checking the location of the corresponding monitoring device 114 for a predefined number of consecutive data points. Furthermore, the monitoring device 114 monitors the attributes of the product and transmits the monitored attributes data to the system 100 (through the server 102) in real-time. In one or more embodiments, the system 100 or the monitoring devices 114 are configured to transmit an alert signal to the user device 106 and entity devices 110 when the monitored attributes of the product exceed the defined threshold values defined in the trip automation rule for the corresponding trip. The detailed operation of the system 100 has been described later in conjunction with FIG. 2.

The system 100 is operatively coupled to a website and so be operable from any Internet-enabled user device and/or entity device. Examples of user devices 106 and entity devices 110 can include but are not limited to, a portable computer, a personal digital assistant, a handheld device, and a workstation. The user devices 106, entity devices 110, and monitoring devices 114 are communicatively coupled or in communication with system 100 (or server 102 implementing the system 100) through a network 118.

Referring to FIG. 2, the functional modules of the system 100/server 102 are illustrated. The system 100/server 102 comprises one or more processor(s) 202 operatively coupled to a memory 204. The one or more processor(s) 202 can be implemented as one or more microprocessors, microcomputers, microcontrollers, digital signal processors, central processing units, logic circuitries, and/or any devices that manipulate data based on operational instructions. Among other capabilities, processor(s) 202 are configured to fetch and execute computer-readable instructions stored in the memory 204 of server 102. The memory 204 can store one or more computer-readable instructions or routines, which can be fetched and executed to create or share the data units over a network service. The memory 204 can comprise any non-transitory storage device including, for example, volatile memory such as random-access memory (RAM), or non-volatile memory such as erasable programmable read-only memory (EPROM), flash memory, and the like.

The system 100 also comprises an interface(s) 206, which further include a variety of interfaces, for example, interfaces for data input and output devices, referred to as I/O devices, storage devices, and the like. The interface(s) 206 includes a communication module to facilitate communication of system 100/server 102 with the monitoring devices 114, the user devices 106, and entity devices 110, through the network 118. The interface(s) 206 may also provide a communication pathway for one or more internal components or units of the system 100/server 102 and with a mobile device of admin 116. Examples of such internal components include, but are not limited to, processing engine(s) 208 and data (database) 210.

The processing engine(s) 208 is implemented as a combination of hardware and programming (for example, programmable instructions) to implement one or more functionalities of the processing engine(s) 208. In one or more embodiments, the processing engine(s) 208 includes a trip automation rule defining unit 212, an event monitoring unit 214, an attribute monitoring unit 216, an alarm unit 218, and other units (not shown). Other unit(s) can supplement the functionalities of the processing engine 208 or the system 100/server 102.

In one or more embodiments, the trip automation rule defining unit 212 enables the system 100/server 102 to allow admin 116 to define or configure a trip automation rule for the shipments in a program. The admin 116 may define or configure the trip automation rule as per their requirements using a desktop application. Further, in one or more embodiments, the trip automation rule defining unit 212 enables the system 100/server 102 to allow the users (receiver) 104 and/or entities (suppliers) 108 to define or configure a trip automation rule for the shipment based on an authorization provided by admin 116. The admin 116 and/or entities 108 can define or configure/modify the trip automation rule as per their requirements using their mobile devices 110. However, the users 104 can access the trip automation rule using their mobile devices 106. Further, the system 100/server 102 can also hide or restrict access to some of the details pertaining to the trip automation rule from the users 104.

In one or more embodiments, for each product to be monitored, the products 112, and thereby their alarm conditions, can be associated to an Origin Location that is defined in the trip automation rule. The alarm conditions can be implemented as per expert guidance or as per the user's unique monitoring requirements. The elements for each product specification alarm include the severity of alarm (information, warning, critical), sensor type to be monitored (temperature, light, CO₂, humidity), alarm frequency per trip (once, continuous, reset after raising, reset after acknowledging), alarm type (single, continuous, cumulative, degree minutes, rate of change), alarm threshold in time (days, hours, minutes), threshold type (high or low), sensor threshold (degrees for temperature, and percentage for light, CO₂, humidity), and product specifications variables for each sensor type (low, ideal, high), but not limited to the like.

Further, a location group is defined in the trip automation rule, which includes a logical grouping of 1 to N locations. Origin Location groups must be defined for the trip automation rule, for instance, origin locations are defined as location group type "origin", intermediate locations are defined as location group type "stops", and destination locations are defined as location group type "final destination".

The geofence around the defined locations is also defined within the locations' configuration, and thereby used by the trip automation rule. Initially, the location name and address of the defined location are extracted from the system record. The system 100 then automatically imports the latitude and longitude coordinates of the defined locations through an address lookup service. Further, the geofence around the defined locations is defined based on location type. In one exemplary embodiment, the geofence radius defined for intermediate stops and for origin or destination can be either the same or different.

In addition, event rules are also defined in Events configuration, and thereby used by the trip automation rule. Configurable event rules define the conditions that must be met for a specific event to be triggered by system 100 processing. Whether a trip is manually or automatically created, the system 100 continuously processes and evaluates incoming monitoring device data to determine which event rule conditions have been met and then executes actions for the event if specified.

In one or more embodiments, the event monitoring unit 214 enables the system 100/server 102 to receive the defined trip automation rule from the trip automation rule defining unit 212. The system 100/server 102 then validates the trip automation rule by identifying the program that the number associated with the product and the corresponding monitoring device 114 is mapped upon activation of the monitoring device 114. Upon validation of the event monitoring rule, the event monitoring unit 214 then enables the system 100/server 102 to follow the trip automation rule. Otherwise, the system 100/server 102 skips the trip automation processing upon a non-existent Program mapping to the corresponding monitoring device 114. This negative matching is an indication the absence of either a mapping of the monitoring device 114 `ShipBill To' to a program and/or the monitoring device 114 'Part Number' to a Program..

The event monitoring unit 214 enables the system 100/server 102 to extract the monitored location (coordinates) of the product associated with the shipment from the corresponding monitoring devices 114.

The system 100/server 102 confirms the location of the product to be at one of the defined locations ((unknown) origin, intermediate stops, or destination) or at an unspecified stop during the trip when the location of the product is found to be within the defined geofence of the corresponding locations. In such case, the system 100/server 102 notifies the status of the product to be "arrived at the stop", "arrived at the destination", "departed from the origin", or "departed from the stop", "at an unspecified stop", and "departed from the unspecified stop", but not limited to the like based on the monitored location. Further, the system 100/server 102 determines product to be in an in transit state when the location of the product is found to be moving and outside the geofence of the locations. In such a case, the system 100/server 102 notifies the status of product to be "in-transit". In addition, the event monitoring unit 214 enables server 102 to determine the halt time of the product at locations by calculating the total time spent by the corresponding monitoring device 114 across the data points identified within the geofence of the corresponding location. The event status including the location, time stamp, and halt time of the product is automatically transmitted to the mobile devices 106, 110 of the users 104, and the entities 108, thereby enabling automated and real-time monitoring of the events associated with the shipment. For intermediate stops, the actual arrival and departure time is based on the time stamp of the location data that meets the geofence and halt time conditions. Similarly, at the final destination, the trip's actual arrival time is based on the time stamp of the location data that meets the geofence arrival condition. The system 100/server 102 may be configured to determine the status of the products 112 based on the monitored attributes and location. As described previously (such as in reference to FIGs. 4A to 4C), the status of the products 112 may be determined by identifying the monitored location of the products 112, comparing the monitored attributes to corresponding threshold ranges, for a configurable duration of time. Each situation corresponding to different combinations (or number of) monitored attributes being within or beyond the corresponding threshold range for the different possible locations of the products 112 (as indicated by the monitored location), may have a corresponding status, which the system 100/server 102 may identify according to a set of rules or the trip automation. The use of such rules that identify a corresponding status for each situation/combination of monitored attributes and locations, may lower latency and improve operational efficiency of system 100/server 102 for tracking the products 112.

In one or more embodiments, the attribute monitoring unit 216 enables the system/server 102 to allow the monitoring device 114 to monitor and transmit the attributes of the defined product. The system 100/server 102 receives the attributes of the product, which include, but is not limited to, temperature, light, humidity, gas composition, pressure, and the like. The attribute monitoring unit 216 enables the system 100/server 102 to compare the monitored attributes with the threshold values defined in the product configuration, therein used by the trip automation rule. The monitored attributes are automatically transmitted to the mobile devices 106, 110 of the users 104, and the entities 108, thereby enabling automated and real-time event monitoring of the shipment.

In one or more embodiments, the alarm unit 218 enables the system 100/server 102 to generate and transmit a set of alert signals to the mobile devices 106, 110 of the users 104, and the entities 108 when the monitored attributes of products 112 exceed the predefined threshold range for a duration. In addition, the alarm unit 218 also enables the system 100/server 102 to skip the trip automation processing upon the absence of a program mapping for the corresponding monitoring device 114.

Referring to FIG. 3, an exemplary block diagram of the monitoring device 114 affixed to products 112 of the system 100 is illustrated. The monitoring device 114 includes a controller (not shown), and processor(s) 302, a memory 304, a global positioning system 306 (GPS), a set of sensors 308, and a communication unit 310 (such as a transceiver), being configured within a single housing that can be easily positioned or affixed at a required location on the products 112. In one or more embodiments, the monitoring devices 114 may be affixed to the products 112 using one or more attachment means. The attachment means may include, but are not be limited to, screws, nails, rivets, adhesives, magnets, hook and loop fasteners, hook and slot fasteners, interlocking elements, friction-grip releasable fasteners, fastening straps, and the like. In one or more embodiments, the attachment means for affixing the monitoring device 114 to the products 112 may be selected based on mode of packaging of the products 112. In one or more embodiments, the monitoring devices 114 may be directly attached to the products 112. In other embodiments, the monitoring devices 114 may be attached to a packaging device (such as bag, box, crate, container, or the like) of the products 112. Since the monitoring device 114 may be implemented with a single housing (having the sensors 308, and the controller, among other components), the monitoring devices 114 may be affixed to the products 112 such that surfaces of the housing and the products 112 are in contact with each other. The contact between the surfaces may allow for accurate monitoring of the attributes, such as reliable temperature sensing of the products 112, for example.

The processor 302 is coupled to the memory 304, the sensors 308, the GPS 306, and the transceiver 310. The processor 302 includes suitable logic, circuitry, and/or interfaces that are operable to execute one or more instructions stored in the memory 304 to perform one or more predefined operations. The memory 304 can be operable to store the one or more instructions. One or more instructions stored in the memory 304 enable the hardware of the monitoring device 114 to perform the predetermined operation.

The GPS 306 is configured to monitor the real-time location of the product where the monitoring device 114 is affixed. In one or more embodiments, the GPS 306 also monitors the location of the product at a predefined interval to lower the power consumption of the monitoring device 114. Further, the sensors 308 are configured to monitor the attributes of the products 112. These attributes include temperature, light, humidity, gas composition, and pressure, but are not limited to the like. These monitored attributes are indicative of the quality of products or goods being stored in the different zones of containers or trailers carrying the products 112. The sensors 308 includes temperature sensors, light sensors, humidity sensors, gas sensors, and pressure sensors, but are not limited to the like. The captured location data of the product and the captured attributes data of the product are then transmitted to the system 100/server 102 via transceiver 310 for further processing as already explained in detail in FIG. 2.

The communication unit 310 (transceiver 310) transmits and receives messages and data to/from the system 100/server 102 and the devices 106, 110 of the users 104/entities 108. The monitoring device 114 further includes a power source (not shown) such as a battery that is within the housing of the monitoring device 114 to supply electrical power to the components of the monitoring device 114.

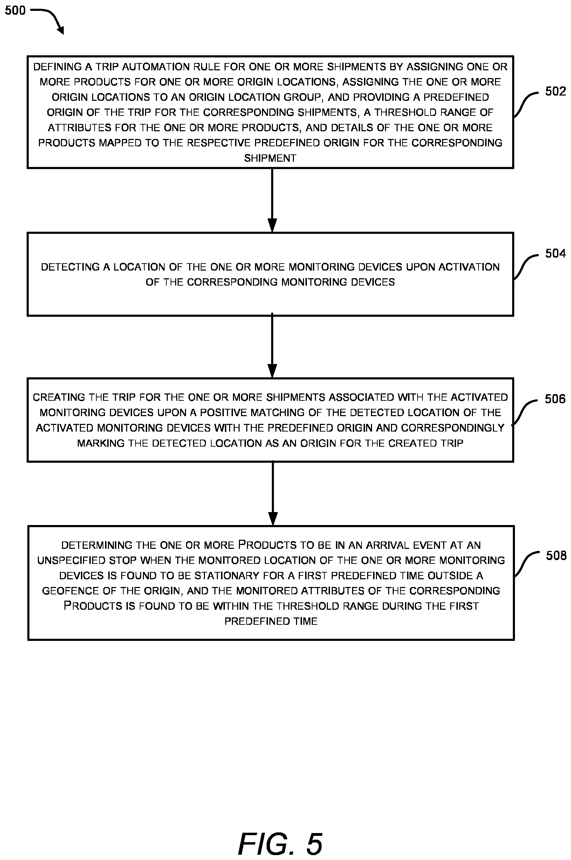

Referring to FIG. 5, a method 500 for real-time automation and event monitoring for inbound shipments is disclosed. The method 500 comprises step 502 of assigning one or more products (such as products 112 of FIG. 1) for one or more origin locations, by assigning the origin locations to an origin location group. Further, the origin location group is assigned to a single inbound trip automation rule. The trip automation rule defining step also comprises steps of providing an origin of the trip for the corresponding shipments, a threshold range of attributes of the one or more products, and details of the one or more products mapped to the respective origin for the corresponding shipment. The trip automation rule identifies the products by way of the origin being reported by the corresponding monitoring device (i.e., by matching the origin reported by the monitoring device with one of the trip automation rules assigned for products originating from the reported origin). The trip automation rule assigns the monitoring device to the created trip when the rule recognizes the program(s) that have been mapped to it. As real-time messages are coming from the monitoring device from an origin assigned to the Origin Location Group that is assigned to the trip automation rule, the program determines which trip automation rule is used to create the trips. Further, the origin determines the product being assigned to the trip and therefore the alarming thresholds necessary for that trip.

In one or more embodiments, at step 502, method 500 can also involve defining one or more locations and a geofence of a radius around each of the one or more locations in the location's configuration, thereby used by the trip automation rule. The locations can include the origin, one or more intermediate stops, and a destination associated with the trip for the shipments.

In one or more embodiments, the method 500 further comprises step 504 of detecting, at a server (such as server 102/system 100), the location entity/group of the one or more monitoring devices (such as monitoring devices 114 of FIG. 1) upon activation of the corresponding monitoring devices (based on control signals obtained from the monitoring devices), followed by step 506 of creating the trip for the one or more shipments associated with the activated monitoring devices upon a positive matching of the detected location of the activated monitoring devices with the origin and correspondingly mark the detected location entity as a marked origin for the created trip. In one or more embodiments, the method 500 may include automatically creating the trip and marking a system default value as the origin for the created trip, either when the detection location entity is unavailable or on negative matching of the detected location with the origin of any of the trip automation rule.

In one or more embodiments, method 500 comprises step 508 of determining the product to be in an arrival event at an unspecified stop when the detected location of the monitoring devices is found to be stationary for a first duration outside a geofence of the origin, and the monitored attributes of the products 112are found to be within the threshold range during the first duration.

In one or more embodiments, when intermediate stops for the trip are not defined in the trip automation rule, the method 500 comprises the steps of determining the products to be at an intermediate stop when the monitored location of the monitoring devices is found to be stationary for a second duration outside the geofence of the origin, and any of the monitored attributes of the product is found to be beyond the threshold range during the second duration.

In one or more embodiments, when the destination for the trip is not defined in the trip automation rule, the method 500 comprises the steps of determining the one or more products to be at a destination when the monitored location of the one or more monitoring devices is found to be stationary for a third duration outside the geofence of the origin, and the monitored attributes of the product are found to be beyond the threshold range.

In one or more embodiments, when the origin, one or more intermediate stops, and a destination associated with the trip for the one or more shipments, and a geofence of a radius around each of the one or more locations entities/groups are defined in the trip automation rule, the method 500 comprises steps of monitoring real-time location of the monitoring devices upon creation of the trip, and further determining and confirming the location of the products to be at one of the locations during the created trip when the monitored location of the one or more monitoring devices associated with the corresponding product is found to be within the geofence of the corresponding locations.

Thus, the invention (system and method) provides a simple, reliable solution for automated creation and processing of inbound trips which also enables automated event monitoring for shipments in real-time.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

The following clauses recite features of the invention that may or may not currently be claimed and which may serve as basis for amendment(s) and/or one or more divisional applications.
1. A system for real-time inbound trip automation and event monitoring for shipments, the system comprising:
   one or more products associated with one or more shipments;
   one or more monitoring devices assigned to one or more shipments and affixed to the one or more products, wherein each of the monitoring devices is configured to:
      monitor attributes of the one or more products; and
      monitor a location of the corresponding products; and
   a server comprising one or more processors coupled to a memory storing instructions executable by the processors, the server configured to:
      receive a set of data packets pertaining to a predefined trip automation rule defined for and associated with an inbound trip for the one or more shipments, wherein the predefined trip automation rule comprises a predefined origin of the trip for the corresponding shipments, and details of one or more products mapped to the respective predefined origin for the corresponding shipment;
      detect a location of the one or more monitoring devices upon activation of the corresponding monitoring devices; and
      automatically create the trip for the one or more shipments associated with the activated monitoring devices upon a positive matching of the detected location with the predefined origin and correspondingly mark the detected location as an origin for the created trip.
2. The system of clause 1, wherein the server is configured to check if a trip is already created for the one or more shipments upon activation of the corresponding assigned monitoring devices and correspondingly create the trip for the respective shipments in case the trip is not created and the detected location of the activated monitoring devices matches with the predefined origin.
3. The system of any one of clauses 1 and 2, wherein the server is configured to extract, from the predefined trip automation rule, the details of the one or more products being mapped to the created trip and correspondingly enable adding the corresponding products to the marked origin.
4. The system of any one of clauses 1 to 3, wherein the attributes associated with the one or more products comprise one or more of temperature, ambient light, humidity, gas composition, and pressure, wherein the predefined trip automation rule further comprises a threshold range of the attributes for the one or more products.
5. The system of any one of clauses 1 to 4, wherein the server is configured to determine the one or more products to be in an arrival event at an unspecified stop when the monitored location of the one or more monitoring devices associated with the corresponding products is found to be stationary for a first predefined time outside a geofence of the origin, and the monitored attributes of the products is found to be within the threshold range during the first predefined time.
6. The system of any one of clauses 1 to 4, wherein the server is configured to determine the one or more products to be at an intermediate stop when the monitored location of the one or more monitoring devices is found to be stationary for a second predefined time outside the geofence of the origin, and any of the monitored attributes of the products are found to be beyond the threshold range during the second predefined time.
7. The system of any one of clauses 1 to 4, wherein the server is configured to determine the one or more products to be at a destination when the monitored location of the one or more monitoring devices is found to be stationary for a third predefined time outside the geofence of the origin, and the monitored attributes of the products is found to be beyond the threshold range.
8. The system of any one of clauses 1 to 4, wherein the predefined trip automation rule comprises one or more predefined locations comprising the predefined origin, one or more intermediate stops, and a destination associated with the trip for the one or more shipments, and a geofence of a predefined radius around each of the one or more predefined locations.
9. The system of clause 8, wherein the server is configured to:
   monitor a location of the one or more monitoring devices upon creation of the trip; and
   determine and confirm the location of the one or more products to be at one of the one or more predefined locations during the created trip when the monitored location of the one or more monitoring devices is found to be within the geofence of the corresponding predefined locations.
10. The system of any one of clauses 8 and 9, wherein the server is configured to determine the one or more products to be at one of the intermediate stops when the monitored location of the one or more monitoring devices is found to be stationary within or within the geofence of the corresponding intermediate stops defined in the predefined trip automation rule.
11. The system of any one of clauses 8 and 9, wherein the server is configured to determine the one or more products to be at the destination when the monitored location of the one or more monitoring devices is found to be stationary within or within the geofence of the destination defined in the predefined trip automation rule.
12. The system of any one of clauses 8 and 9, wherein the server is configured to determine the one or more products to be in an in transit state when the monitored location of the one or more monitoring devices is found to moving and outside the geofence of the one or more predefined locations.
13. The system of any one of clauses 1 to 12, wherein the server is configured to:
   receive messages pertaining to the monitored location and attributes data from the one or more monitoring device upon activation of the corresponding monitoring devices:
   check and validate the predefined trip automation rule upon receiving each of the messages from the one or more monitoring devices, by comparing ShipBill To and/or the Part Number of the products with ShipBill To and/or the Part Number of the corresponding monitoring devices; and
   create the trip and follow the predefined trip automation rule upon a positive matching of the ShipBill To and/or the Part Number of the products and the ShipBill To and/or the Part Number of the corresponding monitoring devices, and
   wherein the server is configured to skip following the predefined trip automation rule when the message is received from an activated monitoring device does not have a mapped ShipBill To and/or Part Number.
14. The system of any one of clauses 1 to 13, wherein the system comprises one or more mobile devices associated with one or more registered users and one or more registered entities associated with a service provider, wherein the one or more mobile devices allow the one or more registered users and the registered entities, based on access and role defined in the predefined trip automation rule, to monitor the attributes of the one or more products and further monitor the location and a corresponding halt time and time stamp of the one or more products being confirmed and notified by the server during the trip.
15. The system of any one of clauses 1 to 14, wherein the server allows the one or more registered users and/or the registered entities to manually create and/or update, using the one or more mobile devices and/or the one or more monitoring devices, the predefined trip automation rule based on access and role defined in the predefined trip automation rule.
16. A method for real-time inbound trip automation and event monitoring of shipments, the method comprising the steps of:
   defining a trip automation rule for one or more shipments by:
      assigning one or more products for one or more origin locations;
      assigning the one or more origin locations to an origin location group; and
      providing a predefined origin of the trip for the corresponding shipments, a threshold range of attributes for the one or more products, and details of the one or more products mapped to the respective predefined origin for the corresponding shipment; and
   detecting a location of the one or more monitoring devices upon activation of the corresponding monitoring devices; and
   creating the trip for the one or more shipments associated with the activated monitoring devices upon a positive matching of the detected location of the activated monitoring devices with the predefined origin and correspondingly marking the detected location as an origin for the created trip.
17. The method of clause 16, wherein the method comprises the steps of determining the one or more products to be in an arrival event at an unspecified stop when the monitored location of the one or more monitoring devices associated with the corresponding products is found to be stationary for a first predefined time outside a geofence of the origin and the monitored attributes of corresponding products is found to be within the threshold range during the first predefined time.
18. The method of clause 16, wherein when intermediate stops for the trip are not defined in the predefined trip automation rule, the method comprises the steps of determining the one or more products to be at an intermediate stop when the monitored location of the one or more monitoring devices is found to be stationary for a second predefined time outside the geofence of the origin, and any of the monitored attributes of the products is found to be beyond the threshold range during the second predefined time.
19. The method of clause 16, wherein when destination for the trip is not defined in the predefined trip automation rule, the method comprises the steps of determining the one or more products to be at a destination when the monitored location of the one or more monitoring devices associated with the corresponding products is found to be stationary for a third predefined time outside the geofence of the origin, and the monitored attributes of the products is found to be beyond the threshold range.
20. The method of clause 16, wherein the predefined trip automation rule comprises one or more predefined locations comprising the predefined origin, one or more intermediate stops, and a destination associated with the trip for the one or more shipments, and a geofence of a predefined radius around each of the one or more predefined locations, wherein the method further comprises:
   monitoring real-time location of the one or more monitoring devices upon creation of the trip; and
   determining and confirming the location of the one or more products to be at one of the one or more predefined locations during the created trip when the monitored location of the one or more monitoring devices is found to be within the geofence of the corresponding predefined locations.
21. The system of clause 1, wherein the one or more processors are further configured to automatically create the trip and mark a system default value as the marked origin for the created trip, either when the detection location is unavailable or on negative matching of the detected location entity with the origin of any of the trip automation rule.

## Claims

1. A system (100) for real-time inbound trip automation and event monitoring for shipments, the system (100) comprising:
one or more products (112) associated with one or more shipments;
one or more monitoring devices (114) assigned to the one or more shipments and affixed to the one or more products (112), wherein each of the monitoring devices (114) is configured to:
monitor attributes of the one or more products (112);
monitor a location of the corresponding products (112); and
transmit a control signal comprising the monitored attributes and location to a server (102); and
the server (102) comprising one or more processors (202) coupled to a memory (204) storing instructions executable by the one or more processors (202), wherein, upon execution of the instructions, the one or more processors (202) are configured to:
receive the control signal pertaining to a trip automation rule defined for an inbound trip for the one or more shipments, wherein the trip automation rule comprises an origin of the trip for the corresponding shipments, and details of the one or more products (112) mapped to the respective origin for the corresponding shipment;
detect a location entity of the one or more monitoring devices (114) upon activation of the corresponding monitoring devices (114) based on the monitored location received in the control signal; and
automatically create the trip for the one or more shipments associated with the activated monitoring devices (114) upon a positive matching of the detected location with the origin and correspondingly mark the detected location entity as a marked origin for the created trip, by instantiating a trip object with the marked origin according to the trip automation rule.

2. The system (100) of claim 1, wherein the one or more processors of the server (102) are further configured to check if a trip is already created for the one or more shipments upon activation of the corresponding assigned monitoring devices (114) and correspondingly create the trip for the respective shipments in case the trip is not created and the detected location of the activated monitoring devices (114) matches with the origin.

3. The system (100) of claim 1 or 2, wherein the one or more processors of the server (102) are further configured to extract, from the trip automation rule, the details of the one or more products (112) being mapped to the created trip and correspondingly enable adding the corresponding products (112) to the marked origin.

4. The system (100) of any of claims 1 to 3, wherein the attributes associated with the one or more products (112) comprise one or more of temperature, ambient light, humidity, gas composition, and pressure, and wherein the trip automation rule further comprises a threshold range of the attributes for the one or more products (112).

5. The system (100) of any preceding claim, wherein the one or more processors of the server (102) are further configured to determine the one or more products (112) to be in any one of: an arrival event at an unspecified stop, an intermediate stop, or a destination, when the monitored location (L1) of the one or more monitoring devices (114) associated with the corresponding products (112) is found to be stationary outside a geofence of the origin, based on duration for which the monitored attributes of the one or more products (112) are found to be beyond the threshold range.

6. The system (100) of any preceding claim, wherein the one or more monitoring devices (114) are affixed to the one or more products (112) by an attachment means, and optionally wherein the attachment means is any one or a combination of: screws, nails, rivets, adhesives, magnets, hook and loop fasteners, hook and slot fasteners, interlocking elements, friction-grip releasable fasteners, and fastening straps.

7. The system of any preceding claim, wherein the one or more monitoring devices (114) comprise a housing configured to accommodate:
one or more sensors configured to detect the attributes and the location of the one or more products (112); and
a controller configured to monitor the attributes and the location detected by the one or more sensors,
optionally wherein the housing is affixed either directly to the one or more products (112), or a packaging device of the one or more products (112).

8. The system (100) of any preceding claim, wherein the trip automation rule comprises one or more locations (L1, L2) comprising the origin, one or more intermediate stops, and a destination associated with the trip for the one or more shipments, and a geofence of a radius around each of the one or more locations, optionally
wherein the one or more processors of the server (102) are further configured to:
monitor a location of the one or more monitoring devices (114) upon creation of the trip; and
determine and confirm the location of the one or more products (112) to be at one of the one or more predefined locations (L1, L2) during the created trip when the monitored location of the one or more monitoring devices (114) is found to be within the geofence of the corresponding predefined locations.

9. The system (100) of claim 8, wherein the one or more processors of the server (102) are configured to determine the one or more products (112) to be at one of the intermediate stops when the detected location (L1) of the one or more monitoring devices (114) is found to be stationary within the intermediate stops or within the geofence of the corresponding intermediate stops defined in the trip automation rule, and/or
wherein the one or more processors of the server (102) are configured to determine the one or more products (112) to be at the destination when the detected location (L2) of the one or more monitoring devices (114) is found to be stationary within the destination or within the geofence of the destination defined in the trip automation rule.

10. The system (100) of any of claims 8 and 9, wherein one or more processors of the server (102) are configured to determine the one or more products (112) to be in an in-transit state when the monitored location of the one or more monitoring devices (114) is found to moving and outside the geofence of the one or more predefined locations.

11. The system (100) of any preceding claim, wherein the one or more processors of the server (102) are configured to:
receive messages pertaining to the detected location and attributes data from the one or more monitoring device (114) upon activation of the corresponding monitoring devices (114):
check and validate the trip automation rule upon receiving each of the messages from the one or more monitoring devices (114), by comparing ShipBill To and/or the Part Number of the products with ShipBill To and/or the Part Number of the corresponding monitoring devices (114); and
create the trip and follow the trip automation rule upon a positive matching of the ShipBill To and/or the Part Number of the products and the ShipBill To and/or the Part Number of the corresponding monitoring devices (114), and
wherein the one or more processors of the server (102) are further configured to skip following the trip automation rule when the message received from an activated monitoring device (114) does not have a mapped ShipBill To and/or Part Number.

12. The system (100) of any preceding claim, wherein the system (100) further comprises one or more mobile devices (106, 110) associated with one or more registered users (104) and one or more registered entities (108) associated with a service provider, and wherein the one or more mobile devices (106, 110) allow the one or more registered users (104) and the registered entities (108), based on access and role defined in the trip automation rule, to monitor the attributes of the one or more products (112) and further monitor the location and a corresponding halt time and time stamp of the one or more products (112) being confirmed and notified by the one or more processors of the server (102) during the trip, and/or
wherein the system allows the one or more registered users (104) and/or the registered entities (108) to manually create and/or update, using the one or more mobile devices (106, 110) and/or the one or more monitoring devices (114), the trip automation rule based on access and role defined in the trip automation rule.

13. A method (500) for real-time inbound trip automation and event monitoring of shipments, the method (500) comprising the steps of:
providing one or more products (112) associated with one or more shipments;
providing one or more monitoring devices (114) assigned to the one or more shipments and affixed to the one or more products (112);
monitoring attributes of the one or more products (112) by each of the one or more monitoring devices (114); and
monitoring a location of the corresponding products (112) by each of the one or more monitoring devices (114); and
transmitting a control signal comprising the monitored attributes and location to a server (102) by each of the one or more monitoring devices (114);
detecting (504), with the server (102), a location of the one or more monitoring devices (114) upon activation of the corresponding monitoring devices (114) based on the monitored location in the control signal; and
creating (506), with the server (102), the trip for the one or more shipments associated with the activated monitoring devices (114) upon a positive matching of the detected location of the activated monitoring devices (114) with an origin and correspondingly marking the detected location entity as a marked origin for the created trip, by instantiating a trip object with the marked origin according to a trip automation rule.

14. The method (500) of claim 13, wherein the method (500) further comprises the steps of:
defining the trip automation rule for the one or more shipments by:
assigning the one or more products (112) for one or more origin locations;
assigning the one or more origin locations to an origin location group; and
providing an origin of the trip for the corresponding shipments, a threshold range of attributes for the one or more products, and details of the one or more products mapped to the respective origin for the corresponding shipment; and
determining (508) the one or more products (112) to be in any one of: an arrival event at an unspecified stop, an intermediate stop, or a destination, when the monitored location of the one or more monitoring devices associated with the corresponding products is found to be stationary outside a geofence of the origin, based on duration for which the monitored attributes of the one or more products are found to be beyond the threshold range , and/or
wherein when intermediate stops for the trip are not defined in the trip automation rule, the method (500) comprises the steps of determining the one or more products (112) to be at an intermediate stop when the detected location (L1) of the one or more monitoring devices (114) is found to be stationary for a second duration outside a geofence of the origin, and any of the monitored attributes of the products (112) is found to be beyond a threshold range during the second duration.

15. The method (500) of claim 13 or 14, wherein the trip automation rule comprises one or more locations (L1, L2) comprising the origin, one or more intermediate stops, and a destination associated with the trip for the one or more shipments, and a geofence of a radius around each of the one or more locations (L1, L2), wherein the method (500) further comprises the steps of:
monitoring real-time location of the one or more monitoring devices (114) upon creation of the trip; and
determining and confirming the location of the one or more products (112) to be at one of the one or more locations (L1, L2) during the created trip when the detected location of the one or more monitoring devices (114) is found to be within a geofence of the corresponding locations (L1, L2).
